# EUROPEAN PATENT SPECIFICATION

(11) **EP 0 968 483 B1**
(45) Date of publication and mention of the grant of the patent: **02.10.2002**
(21) Application number: 97915659.3
(22) Date of filing: 19.03.1997
(51) Int. Cl.: G06K 17/00

(54) **A POINT-OF-SALE TRANSACTION TERMINAL**
EIN VERKAUFSTRANSAKTIONSTERMINAL
TERMINAL POINT DE VENTE TRANSACTIONNEL

(43) Date of publication of application: 05.01.2000
(73) Proprietor: TRINTECH LIMITED, Dublin 18 (IE)
(72) Inventor: DEERING, Seamus, Dublin 14 (IE); MARTIN, Michael, Maynooth, County Kildare (IE); BROPHY, Laurence, Dublin 8 (IE); MADDEN, Denis, Blackrock, County Dublin (IE); McGUIRE, John, Trintech Limited, Dublin 18 (IE); MEEHAN, Christopher, Blackrock, County Dublin (IE); McGUIRE, Cyril, Dalkey, County Dublin (IE)
(74) Representative: O'Connor, Donal Henry
(86) International application number: IE9700021
(87) International publication number: WO98041949

(56) References cited:
- EP-A- 0 200 945
- EP-A- 0 656 600
- EP-A- 0 710 938
- WO-A-94/02908
- US-A- 5 532 466

## Description

The invention relates to a point-of-sale transaction terminal for use in the processing of transaction cards such as magnetic stripe or smart cards at a point-of-sale.

Such terminals are described in United States Patent Specification Nos. US5362952 (MicroBilt) and US5557087 (Duyck). These terminals provide on-line communication with a central authorisation processor for card authorisation, direct printing of receipts, and display transaction data. A unitary terminal with all functionality in the one unit is described in US4782217 (Norand).

It is desirable in many retail situations such as in a restaurant to provide a portable terminal . In this way, the terminal may be carried to a particular location and the transaction executed in real time with wireless communication for card authorisation. Such terminals are described in International Patent Specification Nos WO 94/02908 (Telxon) and WO 96/26505 (Coveley).

EP-A-0 710 938 discloses a terminal according to the preamble of claim 1.

While these terminals are quite useful, they are apparently difficult to modify, to adapt to changing technologies and customer requirements. For example, there is a need for a terminal which can operate satisfactorily in a desk-top mode at the point-of-sale, but can be easily modified to allow portable use. This would considerably reduce production costs, and allow easier user training because of better familiarity with both versions. It is also desirable to improve versatility in configuring terminals according to specific customer requirements. This is particularly important because of rapid changes in technology employed in the terminals.

The invention is directed towards providing such a construction of terminal.

According to the invention there is provided a unitary point-of-sale terminal as defined in claim 1.

The features of the casing construction, modularity of the printer and circuits, and the means in the lower casing part for forming openings allow considerable versatility both during production and after final delivery. The terminal may be easily upgraded in a modular manner-either to provide more up-to-date features or to convert to portable use. Maintenance is also simpler.

In one embodiment, the keypad the display, and the printer paper housing are located in-line on the upper casing part and the casing is of elongate generally rectangular shape in plan in which the length in the direction of alignment of the keypad, display and housing is substantially greater than the width. This is a very compact construction, suitable for placing on a retail counter where space is often limited.

Preferably, the transaction card reader is a magnetic card reader mounted along one side of the casing for card swiping in the alignment direction. This is a compact and ergonomic arrangement.

In one embodiment, the upper casing part supports a hinged cover for the printer paper housing, said cover having a paper exit slot having a sharp paper-cutting edge. This allows changing of paper rolls in a very simple way.

Preferably, the printer is removably mounted on support brackets which extend downwardly on either side of the control and communication circuits.. This allows both compactness and easy interchanging of the printer.

In one embodiment, the card reader is a magnetic card reader which is directly connected by clock and data lines to a control processor on the control circuit, and the processor is programmed to automatically store received data bits on all clock and data lines, to eliminate invalid bits after card reading, and to generate the card data using the valid bits after card reading. The direct connection results in few circuit components, and allows greater versatility whereby the control circuit can operate with different types of magnetic card reader.

In one embodiment the control processor is programmed to read all clock and data bits when any of the clock lines indicates data transmission, all of the bits for each clock indication being written to a single addressable byte for post-reading processing. Preferably the control processor is programmed to process the bytes by eliminating all clock bits which do not indicate data transmission, and their associated data bits. In one embodiment, the control circuit comprises a logic gate connected to the clock and data lines to detect a card-reading indication, and is connected to an interrupt port of the control circuit processor.

In another embodiment the control circuit comprises means for transmitting to the printer circuit low-level general printing commands indicating only the basic characters to be printed. This allows use of a wide range of printers having processing circuits.

Preferably, the control circuit comprises means for transmitting an initialisation string followed by a software protocol corresponding to the dialled host to the communications circuit, the communications circuit comprising means for using these signals to establish communication between the control circuit and a host via the communications processor.

In one embodiment, the terminal further comprises an external switch mode power supply providing a surplus voltage level in excess of 0.5.V, and the control circuit comprises a low dropout regulator connected to receive power. This minimises heat generation within the terminal - particularly important for compactness. It is only the drop across the regulator which causes heat generation.

Preferably, the power supply is connected to a socket in the casing by a plug having a lock to prevent inadvertent disconnection, the lock being actuated by an outer sleeve of the plug. This is a very simple but effective way of ensuring reliability at a busy retail counter.

In one embodiment, the lower casing part comprises a formation for inter-engagement with a corresponding formation of a cradle upon which the terminal may be placed. This is a simple way of allowing use of the terminal with a cradle without affecting its operation in a counter-top mains mode.

According to another aspect, the invention provides a point-of-sale portable terminal system comprising a terminal as claimed in any preceding claim, wherein:-
the communication circuit is a wireless transceiver circuit,
the terminal has a rechargeable battery power supply,
galvanic contacts connected to a battery charging circuit are inserted in openings in the lower casing part, and
signal interfacing light emitting and receiving devices are mounted in a signal interface opening of the lower casing part; and
the system further comprises a cradle comprising:-
   a formation for inter-engagement with the formation on the lower casing part for mechanical registry while supporting the terminal;
   current charging probes for connection to the galvanic contacts of the terminal;
   light emitting and receiving devices for interaction with the signal light emitting and receiving devices of the terminal;
   a communication circuit for communication with a remote authorisation processor; and
   a wireless transceiver circuit for communication with the transceiver circuit of the terminal.

This is a very effective way of providing portable terminals. Whenever in-site on the cradle the terminal is charged, and the LEDs provide very fast data transfer with simple control circuits.

Preferably, the wireless transceiver circuits are radio frequency transceiver circuits, each having a radio antenna. In one embodiment, the cradle comprises a raised peripheral portion forming a seat for the terminal. Preferably, the formation on the cradle is a protrusion and the formation on the lower casing part is a corresponding recess.

The invention will be more clearly understood from the following description of some embodiments thereof, given by way of example only with reference to the accompanying drawings in which:-
Fig 1 is a perspective view from above of a point-of-sale terminal of the invention;
Fig 2 is an underneath plan view of the terminal;
Fig 3 is a diagrammatic part cross-sectional view illustrating construction of the terminal in more detail;
Fig 4 is an exploded view showing interconnection of some of the major components of the terminal;
Fig 5 is a perspective view of a cradle forming part of a portable terminal system of the invention;
Fig 6 is a diagrammatic cross-sectional view illustrating interfacing of a portable unit with a cradle;
Fig 7 is a diagram illustrating the electronic circuits of the terminal;
Fig 8 is a diagram illustrating interconnection of a magnetic card reader and a microprocessor; and
Fig 9 is a flow diagram illustrating the manner in which data read from a magnetic card is processed.

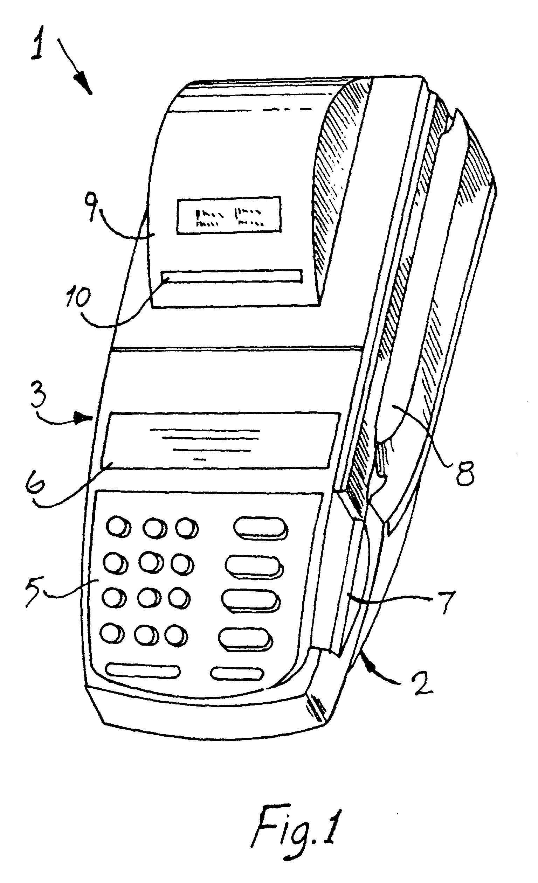

Referring to the drawings, and initially to Fig 1 there is shown a point-of-sale terminal 1 of the invention. The terminal 1 comprises a lower casing part 2 connected to an upper casing part 3. The upper casing part 3 supports a keypad 5, a liquid crystal display (LCD) 6, a smartcard reader 7 and a magnetic card reader 8. The upper casing part 3 also provides an enclosure for a roll of either impact or thermal printer paper covered by a flap 9. The flap 9 has an outlet slot 10 for printed paper.

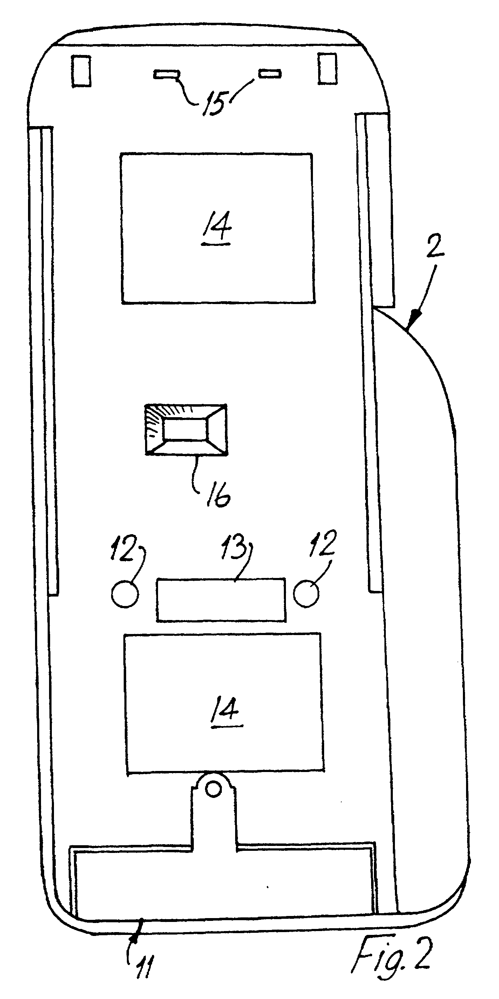

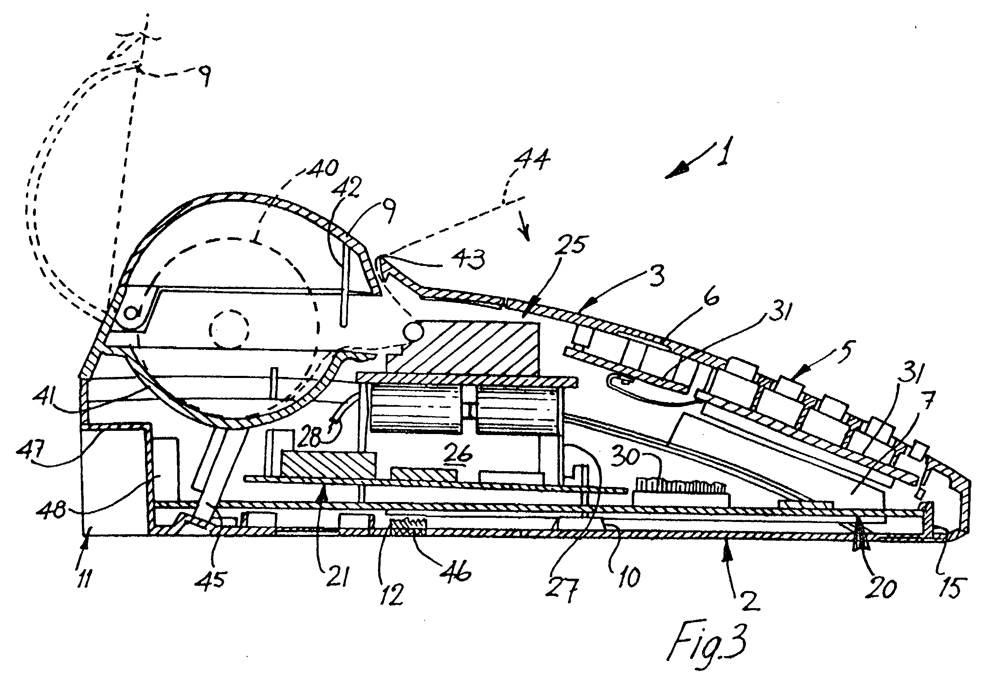

Referring now to Fig 2, the underneath of the terminal 1 formed by the lower casing part 2 has a battery pack chamber 11. It also has interface openings including circular openings 12 for battery charging terminals and a signal interface opening 13 of rectangular shape. The openings 12 and 13 are for use when the terminal 1 is converted for use as a portable terminal in conjunction with a mains-powered desk-top cradle. The lower casing part 2 also provides two merchant card housings 14 (each housing two cards) and a pair of circuit board tabs 15 for holding a control circuit within the lower casing part 2. The tabs 15 are best illustrated in Fig. 3. Finally, the lower casing part 2 comprises a formation, namely recess 16, for mechanical registry with a cradle when used as a portable terminal.

Referring now to Fig 3, detailed construction of the terminal 1 is shown. The terminal 1 has a control circuit 20 which extends along substantially the whole base of the lower casing part 2 and is retained in place by the tabs 15. A modular communication circuit 21 is electrically connected by sockets to the control circuit 20 and is mounted directly above it.

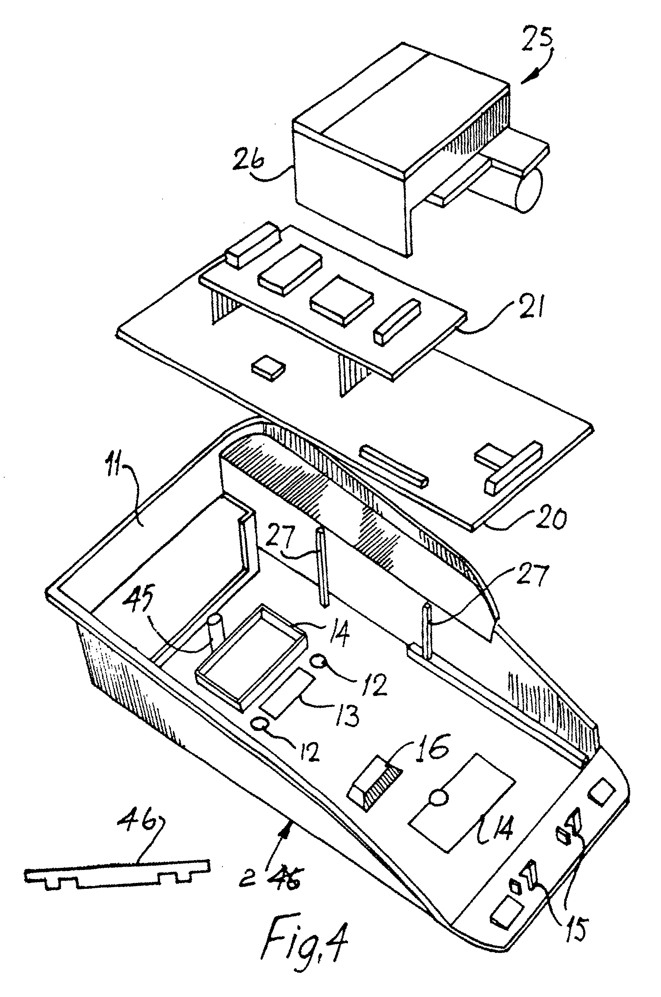

A printer 25 is mounted on a pair of support brackets 26 which allow it to bridge the circuit 20 and 21 and to be easily removed for replacement. The printer 25 may be either of the impact type or the thermal type and indeed these two types are interchangeable. The lower casing part 3 has a pair of vertical guides 27 for the brackets 26, as shown in Fig 4. A ribbon cable 28 connects the printer 25 to the control circuit 20.

A ribbon cable 30 connects the control circuit 20 to an interface circuit 31 connected to the keypad 5 and to the LCD 6.

As shown in Fig 3, the upper casing part 3 has a curved housing 41 which receives a roll 40 of paper. The side walls align the paper and a guide fin 42 keeps the roll within the housing, even when the roll has been almost fully used. The upper casing part 3 also has a cutting edge 43 for cutting the paper at each transaction. A length 44 is shown diagrammatically as it is being pulled forward to cut it.

Additional support for the upper casing part 3 is provided by a pillar 45 which extends downwardly through an opening in the communications circuit 20 and engages the base of the lower casing part 2.

A blank 46 is inserted in the two battery charging terminal openings 12 and in the signal interface opening 13. The battery chamber 11 is empty and a clip-in L-shaped wall 47 is inserted. This allows exposure of a power supply socket 48.

Power is supplied to the socket 48 by an external switch-mode power supply which feeds 6.OV. This is received by a low dropout (LDO) regulator providing 3.OA and 5.OV from a 5.4V minimum input. Thus, the 0.6V excess ensures that despite fluctuations caused by the printer during high-current requirement periods, the regulated output is always correct. This avoids problems such as undesired re-setting of the terminal. Further, because there is only approximately 1.0V across the regulator there is little heat generation. This latter feature is very important at achieving a compact terminal construction.

Referring now to Fig 4, the manner in which the parts of the terminal 1 are mounted in the lower casing part 2 is illustrated. The control circuit 20 is mounted in the base of the casing part 2 and is retained by the tabs 15. The communication circuit 21 is mounted on top of the control circuit 20. The printer 25 spans both circuits by use of the brackets 26.

It will thus be appreciated that the terminal of the invention has a modular construction in which the upper casing part 3 may be easily removed to allow interchanging of the control circuit or the communication circuit in the lower casing part 2. For production of a counter-top terminal this modularity allows changing functionality of these circuits. For example, the communications circuit 21 may be a modem circuit, an ISDN circuit, or alternatively an RS232 serial interface circuit, each having its own processor where appropriate. Because the printer 25 has its own processor and the control circuit is programmed to interface with any suitable printer processor, the printer may be easily replaced according to customer requirements. Further, the brackets 26 and the guides 27 allow easy mechanical interchanging, and also compactness.

Another advantage of this arrangement is the fact that the terminal may be easily converted from a mains-powered desk-top terminal to a portable terminal for use in a premises such as a restaurant. This is achieved by simply replacing the control circuit by one which does not include circuitry for interfacing with a communication circuit 21 such as an ISDN circuit for on-line communication with an authorisation processor. The new control circuit 20 will also have a battery charging circuit, IR devices for signal interfacing, and pads for receiving charging current. The change-over also involves replacing the communication circuit with a radio transceiver circuit and insertion of rechargeable batteries in the battery chamber 11. An IR-transparent pane is inserted in the opening 13.

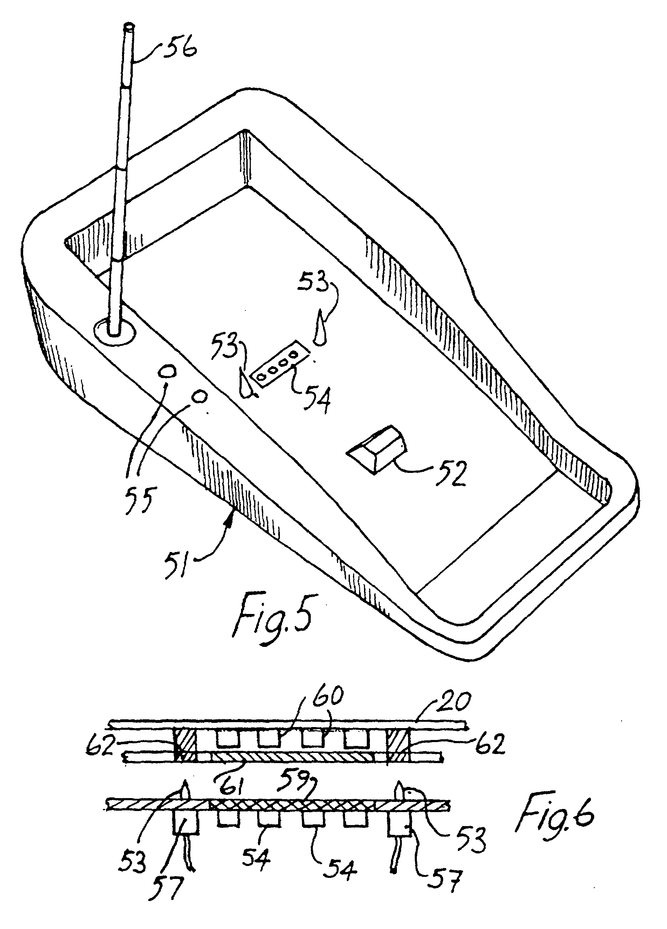

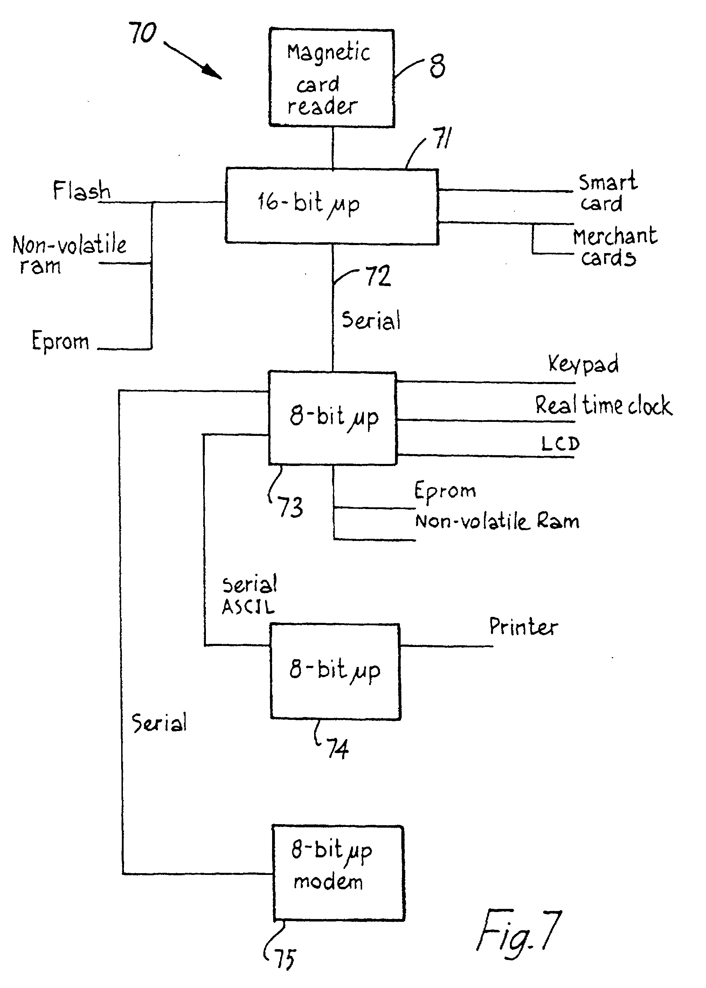

The terminal may then be mounted on a cradle 50 illustrated in Figs 5 and 6. The cradle 50 has a casing 51 having a protrusion 52 for registry with the recess 16 of the terminal 1. It also comprises a pair of spring-biased battery charging pins 53 which are connected to a mains-derived power supply circuit within the housing 51. The cradle 50 also has a set of four infra-red light devices 54 mounted behind an IR-transparent pane 59. The cradle 50 has a mains power supply socket, not shown. LED indicators 55 are used to provide power-on and fault indications, and a radio aerial 56 is connected to a transceiver within the cradle 50.

Referring to Fig 6 each pin 53 is mounted in a spring housing 57 in the cradle 50. The IR receiver and emitter devices 54 are mounted beneath an IR-transparent pane 59. These communicate with corresponding IR devices 60 connected in the control circuit 20 and mounted in registry above an IR-transparent pane 61. Finally, conductive discs 62 are mounted in the openings 12.

After the terminal has been re-configured as described above, it is simply placed in the cradle 50 where it is securely seated between the side walls of the casing 51 with the protrusion 52 and the recess 16 in inter-engagement. Mains power is supplied to the cradle 50 and after rectification is supplied as a charging current via the spring-biased pins 53 and the discs 62 inserted in the openings 12 of the terminal. This terminal inter-engagement is self-cleaning and reliable because of the construction of the pins 53 and discs 62 and the fact that they are spring-biased. Microprocessor signals are communicated via the infra-red devices mounted on the control circuit 20 in the terminal which are in registry with the IR devices 54.

It will thus be appreciated that the terminal of the invention may be easily configured for use as a portable terminal. When used in this manner, it receives power supply to recharge batteries and to provide power for desk-top operation via the pins 53. When it is lifted off the cradle 50 such as to be moved to a table in a restaurant the batteries in the chamber 11 provide power and it communicates with the cradle 50 via the transceiver circuits and the aerials. This allows real-time communication with an authorisation processor for card authorisation. When it is replaced on the cradle 50 it is charged via the pins 53 and the IR LED 54 are used for communication. This type of communication is serial, without modulation. Modulation is avoided because of the mechanical configuration whereby ambient light does not access the IR devices. The IR devices also allow off-line use of a portable terminal by providing a channel for subsequent uploading of data to the authorisation processor via the cradle.

Referring now to Figs 7, 8 and 9, the electronic operation of the terminal 1 is described in more detail. The terminal 1 has an overall electronic circuit 70 and like parts in Fig 7 are assigned the same reference numerals. The control circuit 20 has a 16-bit microprocessor 71 which is connected as illustrated to various memory circuits and to the smart card reader 7, the magnetic card reader 8 and the merchant card readers 14. The microprocessor 71 is connected by a serial link to a separate 8-bit microprocessor 73 in the interface circuit 32. This is connected to the keypad 5, a real time clock, and to the LCD 6. It is also connected to various memory circuits as illustrated.

The microprocessor 73 is in turn connected to a 8-bit microprocessor 74 which controls the printer 25. Another serial link connects the microprocessor 73 to an 8-bit microprocessor 75 of the communication circuit 21. This electronic configuration allows modularity by providing separate microprocessors for printing, and for communications. The serial links are provided by inter-engaging plugs and sockets. The controlling microprocessors 71 and 73 transmit ASCII serial data to the printer microprocessor 74, in turn buffered and printed. This protocol allow interchangeability of printers. An initialisation string followed by a software protocol corresponding to the dialled host is transmitted to the communication microprocessor 75. The latter opens communication with the host, this being maintained by the microprocessors 71 and 73. Again, this interfacing method allows modularity.

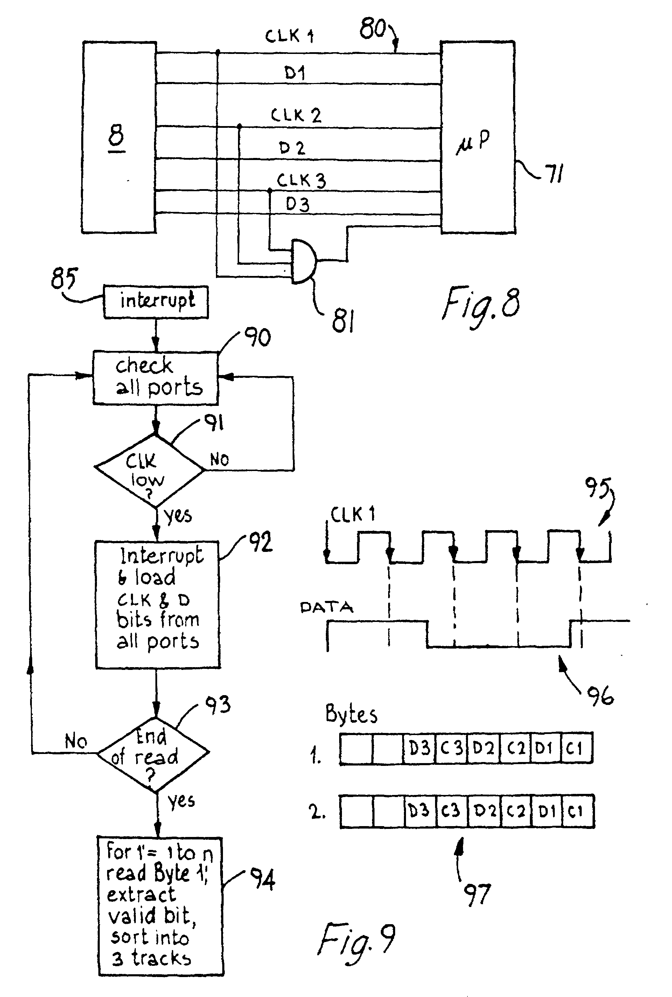

An important aspect of the invention is the simplicity of the parts of the circuit required for reading data from magnetic cards "swiped" in the card reader 8. As shown in Fig 8, the card reader 8 is connected to the microprocessor 71 by six lines, namely three clock lines and associated data lines. These are indicated by CLK1, D1, CLK2, D2, CLK3, and D3. The lines are monitored by an AND gate 81.

The manner in which the data is read is now described with reference to the flow chart of Fig 9. Data is read from the three tracks in an independent manner, as they are not synchronised.

In step 90 the microprocessor 71 receives an interrupt from the gate 81 when a clock signal has gone low. This is indicated by the step 85.

This causes the microprocessor 71 to read all of the bits, both the clock signals CLK1, CLK2 and CLK3, and the data signals, D1, D2 and D3. Referring to the signals 96 shown in Fig 9, the arrows in the clock signal indicate the times when the microprocessor 71 reads all signal levels. The interrupted lines between the clock signal CLK1 and the data signal D1 indicate the data levels for each cycle. For a low falling edge in any clock cycle, the microprocessor 71 writes an 8-bit byte 97 also shown in Fig 9. The leading two bits are redundant.

This task is indicated by the step 92 in Fig 9 and is repeated for every low falling edge of any clock signal. This is a very fast and simple operation in which all of the bits are simply buffered to RAM connected to the microprocessor 71. When the card read is complete, in step 94, the microprocessor 71 reads each Byte 97 in turn and eliminates the invalid bits. This is achieved by reading each clock bit in turn and if it has a high value eliminate both the clock bit and the associated data bit. This operation is carried out by a very fast assembler-level program and provides for very fast and efficient card reading. The need for complex gate circuitry between the card reader 8 and the microprocessor 71 is avoided, direct connections between the reader 8 and ports of the microprocessor 71 being provided instead. This feature of the invention has been found to be particularly useful at reducing complexity without sacrificing response time.

Referring again to Fig 7, the microprocessor 74 is programmed to control a thermal printer by storing every letter of the alphabet which has a substantial horizontal component such as H, L, E, F, T, and Z before beginning the printing of a line, the microprocessor determines how many such letters are in that line and if above a pre-set threshold of 20 characters, the microprocessor 74 splits printing of the line into six sections. This avoids simultaneous printing by heating an excessive number of heating elements simultaneously which would otherwise cause power supply problems within the terminal. The microprocessor 74 operates in an intelligent manner, receiving only flat ASCII strings from the microprocessor 73. Thus, the printer may be very simply interchanged for upgrading or re-configuring to customer requirements.

It will be appreciated that the portable terminal system of the invention will be very easy for merchant operators to use as it operates in a manner very similar to the mains-powered terminal. This allows easy operator training. Another feature of the portable system is the fact that cost can be kept very low for multiple-portable terminal systems. This is because a single, master, cradle can provide the communication functions for all portable terminals, "dummy" cradles having charging functions only being provided for each portable terminal.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied within the scope of the claims in construction and detail.

## Claims

1. A unitary point-of-sale terminal **(1)** comprising:-
a terminal casing comprising lower **(2)** and upper **(3)** inter-engaging casing parts;
a display **(6)** ;
a modular communication circuit **(20)** mounted within the casing;
a modular control circuit **(20)** mounted in the base of the lower casing part **(2)** and connected by sockets to the display **(6)** and the communication circuit **(21)**, and
means in the lower casing part **(2)** to form openings **(12)**, whereby the terminal may be converted for portable use by forming the openings **(12)** and inserting a control circuit **(20)** having interface components in registry with the openings
**characterized by** a keypad **(5)**,
and a printer paper housing in the upper casing part **(3)**;
a transaction card reader **(8)**;
a modular printer **(25)** removably mounted within the casing adjacent the printer paper housing;
said modular control circuit being connected by sockets to the keypad (5), the printer (25) and the card reader (8), and said communication- and control circuits being removably mounted within said casing.

2. A terminal **(1)** as claimed in claim 1, wherein the keypad **(5),** the display **(6),** and the printer paper housing are located in-line on the upper casing part **(3)** and the casing is of elongate generally rectangular shape in plan in which the length in the direction of alignment of the keypad **(5)**, display **(6)** and housing is substantially greater than the width.

3. A terminal **(1)** as claimed in claim 2, wherein the transaction card reader is a magnetic card reader **(8)** mounted along one side of the casing for card swiping in the alignment direction.

4. A terminal **(1)** as claimed in claims 2 or 3, wherein the upper casing part **(3)** supports a hinged cover for the printer paper housing, said cover having a paper exit slot **(10)** having a sharp paper-cutting edge **(43)**.

5. A terminal **(1)** as claimed in any preceding claim, wherein the printer **25)** is removably mounted on support brackets **(26)** which extend downwardly on either side of the control **(20)** and communication **(21)** circuits.

6. A terminal **(1)** as claimed in any preceding claim, wherein the card reader is a magnetic card reader **(8)** which is directly connected by clock and data lines to a control processor **(71)** on the control circuit **(20)**, and the processor is programmed to automatically store received data bits on all clock and data lines, to eliminate invalid bits after card reading, and to generate the card data using the valid bits after card reading.

7. A terminal **(1)** as claimed in claim 6, wherein the control processor **(71)** is programmed to read all clock and data bits when any of the clock lines indicates data transmission, all of the bits for each clock indication being written to a single addressable byte **(97)** for post-reading processing.

8. A terminal **(1)** as claimed in claim 7, wherein the control processor **(71)** is programmed to process the bytes by eliminating all clock bits which do not indicate data transmission, and their associated data bits.

9. A terminal **(1)** as claimed in claim 8, wherein the control circuit **(20)** comprises a logic gate **(81)** connected to the clock and data lines to detect a card-reading indication, and is connected to an interrupt port of the control circuit processor **(71)**.

10. A terminal **(1)** as claimed in any preceding claim, wherein the control circuit **(20)** comprises means for transmitting to the printer circuit low-level general printing commands indicating only the basic characters to be printed.

11. A terminal **(1)** as claimed in any preceding claim, wherein the control circuit **(20)** comprises means for transmitting an initialisation string followed by a software protocol ,corresponding to the dialled host to the communications circuit, the communications circuit comprising means for using these signals to establish communication between the control circuit **(20)** and a host via the communications processor **(75)**.

12. A terminal **(1)** as claimed in any preceding claim, further comprising an external switch mode power supply providing a surplus voltage level in excess of 0.5V, and the control circuit **(20)** comprises a low dropout regulator connected to receive power.

13. A terminal **(1)** as claimed in claim 12 wherein the power supply is connected to a socket **(48)** in the casing by a plug having a lock to prevent inadvertent disconnection, the lock being actuated by an outer sleeve of the plug.

14. A terminal **(1)** as claimed in any preceding claim, wherein the lower casing part **(2)** comprises a formation for inter-engagement with a corresponding formation of a cradle upon which the terminal may be placed.

15. A point-of-sale portable terminal system **(1)** comprising a terminal as claimed in any preceding claim, wherein:-
the communication circuit **(21)** is a wireless transceiver circuit,
the terminal has a rechargeable battery power supply,
galvanic contacts **(62)** connected to a battery charging circuit **(20)** are inserted in openings in the lower casing part **(2)**, and
signal interfacing light emitting and
receiving devices are mounted in a signal interface opening of the lower casing part **(2)** ; and
the system further comprises a cradle **(50)** comprising:-
a formation for inter-engagement with the formation on the lower casing part **(2)** for mechanical registry while supporting the terminal;
current charging probes **(53)** for connection to the galvanic contacts **(62)** of the terminal;
light emitting and receiving devices **(54)** for interaction with the signal light emitting and receiving devices **(60)** of the terminal;
a communication circuit **(21)** for communication with a remote authorisation processor; and
a wireless transceiver circuit for communication with the transceiver circuit of the terminal.

16. A system as claimed in claim 15, wherein the wireless transceiver circuits are radio frequency transceiver circuits, each having a radio antenna **(56)**.

17. A system as claimed in claims 15 or 16, wherein the cradle **(50)** comprises a raised peripheral portion **(51)** forming a seat for the terminal.

18. A system as claimed in any of the claims 15 to 17, wherein the formation on the cradle is a protrusion **(52)** and the formation on the lower casing part is a corresponding recess.

## Patentansprüche

1. Einheitliches Kassenterminal (1), umfassend:
einen Terminalkasten, bestehend aus einem unteren (2) und einem oberen (3) Kastenteil, die sich miteinander im Eingriff befinden;
eine Anzeige (6);
eine modulare Kommunikationsschaltung (20), die in dem Kasten installiert ist;
eine modulare Steuerschaltung (20), die in der Basis des unteren Kastenteils (2) installiert und über Steckbuchsen mit der Anzeige (6) und der Kommunikationsschaltung (21) verbunden ist, und
ein Mittel im unteren Kastenteil (2) zum Bilden von Öffnungen (12), so dass das Terminal auf einen tragbaren Einsatz umgestellt werden kann, indem die Öffnungen (12) gebildet werden und eine Steuerschaltung (20) eingesetzt wird, deren Schnittstellenkomponenten auf die Öffnungen ausgerichtet sind; **gekennzeichnet durch** ein Tastenfeld (5) und ein Druckerpapiergehäuse im oberen Kastenteil (3);
einen Transaktionskartenleser (8);
einen modularen Drucker (25), der entfernbar innerhalb des Kastens neben dem Druckerpapiergehäuse montiert ist, wobei die genannte modulare Steuerschaltung über Steckbuchsen mit der Tastatur (5), dem Drucker (25) und dem Kartenleser (8) verbunden ist und die genannten Kommunikations- und Steuerschaltungen entfernbar in dem genannten Kasten montiert sind.

2. Terminal (1) nach Anspruch 1, wobei das Tastenfeld (5), die Anzeige (6) und das Druckerpapiergehäuse hintereinander auf dem oberen Kastenteil (3) angeordnet sind und der Kasten eine längliche, allgemein rechteckige Form in der Draufsicht hat, wobei die Länge in Orientierungsrichtung des Tastenfelds (5), der Anzeige (6) und des Gehäuses erheblich größer ist als die Breite.

3. Terminal (1) nach Anspruch 2, wobei der Transaktionskartenleser ein Magnetkartenleser (8) ist, der entlang einer Seite des Kastens montiert ist, damit Karten in Orientierungsrichtung durchgezogen werden können.

4. Terminal (1) nach Anspruch 2 oder 3, wobei das obere Kastenteil (3) eine klappbar damit verbundene Abdeckung für das Druckerpapiergehäuse aufweist, wobei die genannte Abdeckung einen Papieraustrittsschlitz (10) mit einer scharfen Papierschneidekante (43) hat.

5. Terminal (1) nach einem der vorherigen Ansprüche, wobei der Drucker (25) entfernbar auf Trägern (26) montiert ist, die auf beiden Seiten der Steuer- (20) und Kommunikationsschaltung (21) abwärts verlaufen.

6. Terminal (1) nach einem der vorherigen Ansprüche, wobei der Kartenleser ein Magnetkartenleser (8) ist, der über Takt- und Datenleitungen direkt mit einem Steuerprozessor (71) auf der Steuerschaltung (20) verbunden ist, und der Prozessor so programmiert ist, um empfangene Datenbits automatisch in allen Takt- und Datenleitungen zu speichern, um ungültige Bits nach dem Kartenlesevorgang zu beseitigen und Kartendaten mit den gültigen Bits nach dem Kartenlesevorgang zu erzeugen.

7. Terminal (1) nach Anspruch 6, wobei der Steuerprozessor (71) so programmiert ist, dass alle Takt- und Datenbits gelesen werden, wenn irgendeine der Taktleitungen auf eine Datenübertragung hinweist, wobei alle Bits zu jeder Taktanzeige in ein einzelnes adressierbares Byte (97) zur Nachleseverarbeitung geschrieben werden.

8. Terminal (1) nach Anspruch 7, wobei der Steuerprozessor (71) so programmiert ist, dass die Bytes verarbeitet werden, indem alle Taktbits, die keine Datenübertragung anzeigen, und ihre zugehörigen Datenbits beseitigt werden.

9. Terminal (1) nach Anspruch 8, wobei die Steuerschaltung (20) ein Verknüpfungsglied (81) umfasst, das mit den Takt- und Datenleitungen verbunden ist, um eine Kartenleseanzeige zu erfassen, und mit einem Unterbrechungsport des Steuerschaltungsprozessors (71) verbunden ist.

10. Terminal (1) nach einem der vorherigen Ansprüche, wobei die Steuerschaltung (20) ein Mittel zum Übertragen von niederen allgemeinen Druckbefehlen zur Druckerschaltung umfasst, die nur die zu druckenden Basiszeichen angeben.

11. Terminal (1) nach einem der vorherigen Ansprüche, wobei die Steuerschaltung (20) ein Mittel zum Übertragen einer Initialisierungskette, der ein Softwareprotokoll folgt, das dem angewählten Host entspricht, zur Kommunikationsschaltung umfasst, wobei die Kommunikationsschaltung ein Mittel zur Verwendung dieser Signale umfasst, um eine Kommunikation zwischen der Steuerschaltung (20) und einem Host über den Kommunikationsprozessor (75) aufzubauen.

12. Terminal (1) nach einem der vorherigen Ansprüche, ferner umfassend ein externes Schaltnetzteil, das einen überschüssigen Spannungspegel von mehr als 0,5 V liefert, und die Steuerschaltung (20) umfasst einen Low-Dropout-Regler, der für die Aufnahme von Energie angeschlossen ist.

13. Terminal (1) nach Anspruch 12, wobei das Netzteil an einer Buchse (48) im Kasten mit einem Stecker angeschlossen ist, der eine Sperre aufweist, um eine unbeabsichtigte Trennung zu verhindern, wobei die Sperre durch eine Außenhülle des Steckers betätigt wird.

14. Terminal (1) nach einem der vorherigen Ansprüche, wobei das untere Kastenteil (2) eine Formation für einen Eingriff in eine entsprechende Formation eines Gestells umfasst, auf das das Terminal gesetzt werden kann.

15. Tragbares Kassenterminalsystem (1), umfassend ein Terminal nach einem der vorherigen Ansprüche, wobei:
die Kommunikationsschaltung (21) eine drahtlose Sender-Empfänger-Schaltung ist,
das Terminal eine Stromversorgung mit wiederaufladbaren Batterien aufweist,
galvanische Kontakte (62), die mit einer Batterieladeschaltung (20) verbunden sind, in Öffnungen im unteren Kastenteil (2) eingefügt sind, und
signalkoppelnde lichtemittierende und -empfangende Vorrichtungen in einer Signalkopplungsöffnung des unteren Kastenteils (2) montiert sind; und
das System ferner ein Gestell (50) umfasst, das folgendes beinhaltet:
eine Formation für einen Eingriff in die Formation am unteren Kastenteil (2) für eine mechanische Ausrichtung, während das Terminal getragen wird;
Stromladefühler (53) für einen Anschluss an die galvanischen Kontakte (62) des Terminals;
lichtemittierende und -empfangende Vorrichtungen (54) für eine Wechselwirkung mit den signallichtemittierenden und -empfangenden Vorrichtungen (60) des Terminals;
eine Kommunikationsschaltung (21) für eine Kommunikation mit einem ortsfernen Autorisierungsprozessor; und
eine drahtlose Sender-Empfänger-Schaltung für eine Kommunikation mit der Sender-Empfänger-Schaltung des Terminals.

16. System nach Anspruch 15, wobei die drahtlosen Sender-Empfänger-Schaltungen Sender-Empfänger-Hochfrequenzschaltungen mit jeweils einer Funkantenne (56) sind.

17. System nach Anspruch 15 oder 16, wobei das Gestell (50) einen erhabenen Umfangsabschnitt (51) umfasst, der einen Sitz für das Terminal bildet.

18. System nach einem der Ansprüche 15 bis 17, wobei die Formation an dem Gestell ein Vorsprung (52) und die Formation am unteren Kastenteil eine entsprechende Aussparung ist.

## Revendications

1. Terminal de point de vente unitaire (1) comprenant:
un boîtier de terminal comprenant des parties de boîtier inférieure (2) et supérieure (3) s'engageant l'une avec l'autre ;
un affichage (6) ;
un circuit de communication modulaire (20) monté à l'intérieur du boîtier ;
un circuit de commande modulaire (20) monté dans la base de la partie de boîtier inférieure (2) et connecté par des prises à l'affichage (6) et au circuit de communication (21), et
un moyen dans la partie de boîtier inférieure (2) en vue de former des ouvertures (12), par lequel le terminal peut être converti en vue d'une utilisation portable en formant les ouvertures (12) et insérant un circuit de commande (20) ayant des composants d'interface en alignement avec les ouvertures, **caractérisé par** un clavier (5), et un compartiment de papier d'imprimante dans la partie de boîtier supérieure (3) ;
un lecteur de carte de transaction (8) ;
une imprimante modulaire (25) montée de manière amovible au sein du boîtier à côté du compartiment de papier d'imprimante ; ledit circuit de commande modulaire étant connecté par des prises au clavier (5), à l'imprimante (25) et au lecteur de carte (8), et lesdits circuits de communication et de commande étant montés de manière amovible au sein dudit boîtier.

2. Terminal (1) selon la revendication 1, dans lequel le clavier (5), l'affichage (6) et le compartiment de papier d'imprimante sont situés en ligne sur la partie de boîtier supérieure (3) et le boîtier est d'une forme allongée généralement rectangulaire en plan dans lequel la longueur dans le sens de l'alignement du clavier (5), de l'affichage (6) et du compartiment est substantiellement supérieure à la largeur.

3. Terminal (1) selon la revendication 2, dans lequel le lecteur de carte de transaction est un lecteur de carte magnétique (8) monté le long d'un côté du boîtier pour le passage de la carte dans le sens de l'alignement.

4. Terminal (1) selon la revendication 2 ou 3, dans lequel la partie de boîtier supérieure (3) supporte un couvercle articulé pour le compartiment de papier d'imprimante, ledit couvercle ayant une fente de sortie de papier (10) ayant un bord de coupe de papier acéré (43).

5. Terminal (1) selon l'une quelconque des revendications précédentes, dans lequel l'imprimante (25) est montée de manière amovible sur des potences de support (26) qui s'étendent vers le bas de chaque côté des circuits de commande (20) et de communication (21).

6. Terminal (1) selon l'une quelconque des revendications précédentes, dans lequel le lecteur de carte est un lecteur de carte magnétique (8) qui est connecté directement par des lignes d'horloge et de données à un processeur de commande (71) sur le circuit de commande (20), et le processeur est programmé pour stocker automatiquement des bits de données reçus sur toutes les lignes d'horloge et de données, afin d'éliminer des bits non valables après lecture de la carte, et générer les données de carte en utilisant les bits valables après lecture de la carte.

7. Terminal (1) selon la revendication 6, dans lequel le processeur de commande (71) est programmé pour lire tous les bits d'horloge et de données quand l'une quelconque des lignes d'horloge indique une transmission de données, tous les bits de chaque indication d'horloge étant écrit dans un octet adressable unique (97) en vue d'un traitement de post-lecture.

8. Terminal (1) selon la revendication 7, dans lequel le processeur de commande (71) est programmé pour traiter les octets en éliminant tous les bits d'horloge qui n'indiquent pas de transmission de données, et leurs bits de données associés.

9. Terminal (1) selon la revendication 8, dans lequel le circuit de commande (20) comprend une porte logique (81) connectée aux lignes d'horloge et de données en vue de détecter une indication de lecture de carte, et est connecté à un port d'interruption du processeur de circuit de commande (71).

10. Terminal (1) selon l'une quelconque des revendications précédentes, dans lequel le circuit de commande (20) comprend un moyen pour transmettre au circuit d'imprimante des commandes d'impression générales de bas niveau indiquant uniquement les caractères élémentaires à imprimer.

11. Terminal (1) selon l'une quelconque des revendications précédentes, dans lequel le circuit de commande (20) comprend un moyen pour transmettre au circuit de communications une chaîne d'initialisation suivie d'un protocole logiciel correspondant à l'hôte appelé, le circuit de communications comprenant un moyen pour utiliser ces signaux en vue d'établir une communication entre le circuit de commande (20) et un hôte par l'intermédiaire du processeur de communications (75).

12. Terminal (1) selon l'une quelconque des revendications précédentes, comprenant en outre une alimentation à mode de commutation externe fournissant un niveau de tension de surplus de plus de 0,5V, et le circuit de commande (20) comprend un régulateur de chutes basses connecté pour recevoir une puissance.

13. Terminal (1) selon la revendication 12, dans lequel l'alimentation est connecté à une prise (48) dans le boîtier par une fiche ayant un verrou afin d'empêcher une déconnexion accidentelle, le verrou étant actionné par un manchon externe de la fiche.

14. Terminal (1) selon l'une quelconque des revendications précédentes, dans lequel la partie de boîtier inférieure (2) comprend une formation en vue de son inter-engagement avec une formation correspondante d'un berceau sur lequel le terminal peut être placé.

15. Système à terminal portable de point de vente (1) comprenant un terminal selon l'une quelconque des revendications précédentes, dans lequel:
le circuit de communication (21) est un circuit d'émetteur-récepteur sans fil,
le terminal a une alimentation par batterie rechargeable,
des contacts galvaniques (62) connectés à un circuit de chargement de batterie (20) sont insérés dans des ouvertures dans la partie de boîtier inférieure (2), et
des dispositifs émetteurs et récepteurs de lumière à interfaçage de signaux sont montés dans une ouverture d'interface de signaux de la partie de boîtier inférieure (2) ; et
le système comprend en outre un berceau (50) comprenant :
une formation en vue de son inter-engagement avec la formation sur la partie de boîtier inférieure (2) pour l'alignement mécanique tout en supportant le terminal ;
des sondes de charge de courant (53) pour la connexion aux contacts galvaniques (62) du terminal ;
des dispositifs émetteurs et récepteurs de lumière (54) pour l'interaction avec les dispositifs émetteurs et récepteurs de lumière de signal (60) du terminal ;
un circuit de communication (21) pour communiquer avec un processeur d'autorisation distant ; et
un circuit d'émetteur-récepteur sans fil pour communiquer avec le circuit d'émetteur-récepteur du terminal.

16. Système selon la revendication 15, dans lequel les circuits d'émetteur-récepteur sans fil sont des circuits d'émetteur-récepteur radio, ayant chacun une antenne radio (56).

17. Système selon la revendication 15 ou 16, dans lequel le berceau (50) comprend une partie périphérique surélevée (51) formant un siège pour le terminal.

18. Système selon l'une quelconque des revendications 15 à 17, dans lequel la formation sur le berceau est une saillie (52) et la formation sur la partie de boîtier inférieure est un évidement correspondant.
